# EUROPÄISCHE PATENTSCHRIFT

(11) **EP 2 943 519 B1**
(45) Veröffentlichungstag und Bekanntmachung des Hinweises auf die Patenterteilung: **02.11.2016**
(21) Anmeldenummer: 13814550.3
(22) Anmeldetag: 20.12.2013
(51) Int. Cl.: C08G 59/18, C08G 59/56, C08L 63/00, C09D 163/00

(54) **HÄRTER FÜR EMISSIONSARME EPOXIDHARZ-PRODUKTE**
HARDENERS FOR LOW-EMISSION EPOXY RESIN PRODUCTS
DURCISSEURS POUR PRODUITS EN RÉSINE ÉPOXYDE À FAIBLE TAUX D'ÉMISSION

(30) Priorität: 08.01.2013 EP 13150545
(43) Veröffentlichungstag der Anmeldung: 18.11.2015
(73) Patentinhaber: Sika Technology AG, 6340 Baar (CH)
(72) Erfinder: KASEMI, Edis, CH-8046 Zürich (CH); KRAMER, Andreas, CH-8006 Zürich (CH); STADELMANN, Ursula, CH-8046 Zürich (CH); BURCKHARDT, Urs, CH-8049 Zürich (CH)
(74) Vertreter: Sika Patent Attorneys
(86) Internationale Anmeldenummer: PCT/EP2013/077703
(87) Internationale Veröffentlichungsnummer: WO 2014/108305

(56) Entgegenhaltungen:
- WO-A1-02/074832
- WO-A1-2007/060091
- GB-A- 1 258 454
- JP-A- S62 177 016
- US-A- 4 751 278

## Beschreibung

### Technisches Gebiet

Die Erfindung betrifft das Gebiet der Härter für Epoxidharze, Epoxidharz-Produkte sowie deren Verwendung, insbesondere als Beschichtungen, Beläge und Anstriche.

### Stand der Technik

In Raumtemperatur-härtenden Epoxidharz-Produkten werden als Härter typischerweise aminhaltige Mischungen auf Basis von Epoxid-Amin-Addukten eingesetzt. Ohne den Einsatz von Verdünnern sind diese meist zu hochviskos, vor allem für Beschichtungsanwendungen. Als Verdünner werden insbesondere Benzylalkohol, Glykole oder Alkylphenole verwendet, welche vergleichsweise geruchsarm sind und eine gute Verträglichkeit mit dem Epoxidharz aufweisen. Solche Verdünner sind gegenüber Epoxidharzen bei Raumtemperatur unreaktiv und werden bei der Aushärtung nicht in die Harzmatrix eingebaut. Heutzutage werden aber zunehmend emissionsarme Produkte gewünscht, die nach der Aushärtung einen geringen Gehalt von durch Verdampfungs- oder Diffusionsprozesse freisetzbaren Substanzen aufweisen. Für emissionsarme Epoxidharz-Produkte können nicht einbaubare Verdünner deshalb nur in sehr geringer Menge oder gar nicht verwendet werden.

Eine andere Möglichkeit, niedrigviskose Härter auf Basis von Epoxid-Amin-Addukten zu erhalten, besteht darin, den Amingehalt zu erhöhen, indem ein Amin-Überschuss zur Herstellung der Addukte eingesetzt wird oder die Addukte nachträglich durch Zugabe von Aminen verdünnt werden. Allerdings führt ein erhöhter Gehalt an primären Aminen, wie beispielsweise Diethylentriamin, Isophorondiamin oder Xylylendiamin, bei flächiger Anwendung typischerweise zu Aushärtungsmängeln ("Blushing-Effekten") wie Trübungen, Flecken, rauer oder klebriger Oberfläche, welche durch Salzbildung der Amine mit Kohlendioxid (CO₂) aus der Luft verursacht werden und insbesondere bei hoher Luftfeuchtigkeit und/oder tiefen Temperaturen auftreten. Die Verwendung von sekundären anstelle von primären Aminen wiederum führt zu langsamer Aushärtung, insbesondere bei tiefen Temperaturen, sowie meist zu einer geringen Härte.

Aus US 4,751,278 und WO 99/28365 sind spezielle Addukte aus Diaminen und Monoepoxiden als Härter für Epoxidharze bekannt, welche bei tiefen Temperaturen gut aushärten. Die Addukte werden in Kombination mit Benzylalkohol und optional einem kleinen primären Diamin verwendet.

In US 8,063,157 und US 7,683,154 werden Härter auf Basis von niedrigviskosen Epoxid-Amin-Addukten offenbart, welche ohne Zusatz von nichtreaktiven Verdünnern verarbeitbar sind. Die Herstellung der beschriebenen Addukte ist aufwendig, indem das Amin in starkem Überschuss eingesetzt und anschliessend abdestilliert wird. Ohne Abdestillieren des überschüssigen Amins entstehen bei der Aushärtung in der Kälte fehlerhafte Oberflächen.

Weitere Addukte aus Polyaminen und Monoepoxid sind beispielsweise beschrieben in JP S62 177016 A, GB 1 258 454 A oder WO 02/074832 A1.

### Darstellung der Erfindung

Aufgabe der vorliegenden Erfindung ist es daher, einen Härter für emissionsarme Epoxidharz-Produkte zur Verfügung zu stellen, der einfach herstellbar ist, der niedrigviskos und zusammen mit Epoxidharzen gut verarbeitbar ist und mit diesen auch bei feuchtkalten Bedingungen schnell und ohne Blushing-Effekte aushärtet und dabei insbesondere Beschichtungen von hoher Härte und Beständigkeit ergibt.

Überraschenderweise wurde gefunden, dass der Härter nach Anspruch 1 diese Aufgabe sehr gut löst. Das im Härter nach Anspruch 1 enthaltene Addukt ist ohne Destillations-Schritt in einem einfachen Verfahren herstellbar. Der Härter ist so niedrigviskos, dass er mit Epoxidharzen ohne die Hilfe von Verdünnern gut verarbeitbar ist, auch als selbstverlaufende Epoxidharz-Beschichtungen. Er bewirkt eine rasche Aushärtung ohne Blushing-Effekte, auch bei ungünstigen Bedingungen, beispielsweise bei 8 °C und hoher Luftfeuchtigkeit und ermöglicht Epoxidharz-Beschichtungen von hoher Härte und geringer Sprödigkeit. Dadurch ist der Härter nach Anspruch 1 besonders geeignet für Beschichtungen, insbesondere auch für Böden. Mit dem Härter nach Anspruch 1 sind emissionsarme Epoxidharz-Produkte zugänglich, welche die Bedingungen für ÖkoGütesiegel, beispielsweise nach Emicode (EC1 Plus), AgBB, DIBt, Der Blaue Engel, AFSSET, RTS (M1) und US Green Building Council (LEED), erfüllen und gleichzeitig hohen Ansprüchen bezüglich Verarbeitungs- und Gebrauchseigenschaften genügen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter, geeignet zum Aushärten von Epoxidharzen, enthaltend
- mindestens ein Addukt aus mindestens einem primären Diamin **P1** und mindestens einem aromatischen Monoepoxid,
- mindestens ein primäres Diamin **P2,** und
- mindestens ein sekundäres Diamin, welches frei von primären Aminogruppen und frei von Hydroxylgruppen ist, und bei welchem es sich nicht um 1,3-Bis(benzylaminomethyl)benzol handelt.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "primäres Diamin" wird ein Amin mit zwei primären Aminogruppen bezeichnet, welches frei ist von sekundären Aminogruppen.

Als "sekundäres Diamin" wird ein Amin mit zwei sekundären Aminogruppen bezeichnet, welches frei ist von primären Aminogruppen.

Als "primäre Aminogruppe" wird eine NH₂-Gruppe bezeichnet, die an einen organischen Rest gebunden ist und als "sekundäre Aminogruppe" wird eine NH-Gruppe bezeichnet, die an zwei organische Reste, welche auch gemeinsam Teil eines Rings sein können, gebunden ist.

Als "Aminwasserstoff" werden die Wasserstoffatome von primären und sekundären Aminogruppen bezeichnet.

Als "Aminwasserstoff-Equivalentgewicht" wird der Gewichtsanteil eines Härters oder eines Amins pro im Härter oder im Amin vorhandenen Aminwasserstoff bezeichnet.

Als "nicht einbaubarer Verdünner" wird eine in einem Epoxidharz lösliche und dessen Viskosität senkende Substanz bezeichnet, welche bei der Aushärtung des Epoxidharzes nicht kovalent in die Harzmatrix eingebaut wird.
Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird.

Der beschriebene Härter enthält mindestens ein Addukt aus mindestens einem primären Diamin **P1** und mindestens einem aromatischen Monoepoxid. Dieses Addukt weist im Vergleich mit Addukten aus aromatischen Diepoxiden eine wesentlich geringere Viskosität auf.
Im Vergleich mit Addukten aus aliphatischen Monoepoxiden weist es eine wesentlich bessere Verträglichkeit mit den üblichen Epoxidharzen auf Bisphenol A- oder F-Basis auf.
Im Vergleich mit Addukten aus Aminen mit mehr als zwei Aminogruppen, insbesondere Polyalkylenaminen wie DETA oder TETA, verursachet der Härter wesentlich weniger Blushing-Effekte, auch wenn das Addukt ohne Destillations-Schritt erhalten wurde.

Das Addukt wird hergesteht, indem das Monoepoxid und das Diamin vermischt und die Epoxidgruppen des Monoepoxids mit Aminogruppen des primären Diamins mit üblichen Verfahren, insbesondere bei einer Temperatur im Bereich von 40 bis 120 °C, bevorzugt 40 bis 80 °C, zur Reaktion gebracht werden. Dabei werden das Diamin und das Monoepoxid vorteilhaft in einer solchen Menge eingesetzt, dass das Addukt mindestens eine, bevorzugt mindestens zwei, Aminwasserstoffe aufweist.
Das Addukt wird bevorzugt hergestellt, indem ein Überschuss an primärem Diamin **P1** mit dem Monoepoxid umgesetzt wird und das überschüssige primäre Diamin **P1** anschliessend destillativ entfernt wird.
Besonders bevorzugt wird das Addukt ohne Destillations-Schritt hergestellt, insbesondere ohne Abdestillieren von unreagiertem primärem Diamin **P1.** Diese Herstellung ist besonders einfach und benötigt keine aufwändigen Destillationseinrichtungen.

Bevorzugt ist das Addukt erhältlich durch Umsetzung des primären Diamins **P1** und des Monoepoxids in einem Molverhältnis im Bereich von 1/0.8 bis 1/1.5, insbesondere 1/0.9 bis 1/1.2. Ein solches Addukt ist direkt nach der Herstellung ohne weitere Aufarbeitung, insbesondere ohne Abdestillieren von unreagiertem primärem Diamin **P1,** als Bestandteil des beschriebenen Härters einsetzbar.
Ein solches Addukt enthält als Hauptbestandteil Monoaddukte der Formel (I) und als Nebenbestandteile Diaddukte der Formel (II) und unreagiertes primäres-Diamin **P1.** Der Begriff "Addukt" schliesst dabei alle diese Bestandteile ein. 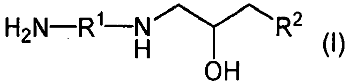 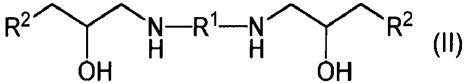 In den Formeln (I) und (II) steht
R¹ für den difunktionellen Rest des primären Diamins **P1** nach Entfernung seiner beiden primären Aminogruppen und
R² für den Rest des aromatischen Monoepoxids nach Entfernung seiner Epoxidgruppe.

Das aromatische Monoepoxid ist bevorzugt der Glycidylether eines Phenols, insbesondere der Glycidylether von Phenol, Kresol, tert.Butylphenol oder Cardanol.

Besonders bevorzugt wird das Addukt aus einem Kresylglycidylether erhalten. Als Kresylglycidylether geeignet sind alle isomeren Kresylglycidylether und Gemische davon, insbesondere kommerziell erhältliche Typen wie insbesondere Araldite^{®} DY-K (von Huntsman), Polypox™ R6 (von Dow), Heloxy™ KR (von Hexion) oder Erisys^{®} GE-10 (von CVC Spec. Chem.). Insbesondere bevorzugt ist ortho-Kresylglycidylether.

Ein solches Addukt weist eine besonders gute Verträglichkeit mit den üblichen Epoxidharz-Produkten auf und ermöglicht ausgehärtete Filme von hohem Glanz und hoher Härte.

Als primäres Diamin **P1** geeignet sind
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (= Isophorondiamin oder IPD), 2- und 4-Methyl-1,3-diaminocyclohexan und Mischungen davon, 1,3- und 1,4-Bis(aminomethyl)cyclohexan, 2,5(2,6)-Bis(aminomethyl)bicyclo[2.2.1]heptan (NBDA), 3(4), 8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan sowie 1,3- und 1,4-Bis(aminomethyl)-benzol;
- tertiäre Aminogruppen aufweisende Polyamine mit zwei primären aliphatischen Aminogruppen, insbesondere N,N'-Bis(aminopropyl)-piperazin, N,N-Bis(3-aminopropyl)methylamin, N,N-Bis(3-aminopropyl)ethylamin, N,N-Bis(3-aminopropyl)propylamin, N,N-Bis(3-aminopropyl)cyclohexylamin, N,N-Bis(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis(3-aminopropyl)dodecylamin und N,N-Bis(3-aminopropyl)talgalkylamin, erhältlich als Triameen^{®} Y12D und Triameen^{®} YT (von Akzo Nobel);
- Ethergruppen-haltige aliphatische primäre Diamine, insbesondere Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, Bis(3-aminopropyl)polytetrahydrofurane und andere Polytetrahydrofurandiamine, cycloaliphatische ethergruppenhaltige Diamine aus der Propoxylierung und nachfolgenden Aminierung von 1,4-Dimethylolcyclohexan, erhältlich insbesondere als Jeffamine^{®} RFD-270 (von Huntsman), sowie Polyoxyalkylendiamine, welche typischerweise Produkte aus der Aminierung von Polyoxyalkylendiolen darstellen und beispielsweise erhältlich sind unter dem Namen Jeffamine^{®} (von Huntsman), unter dem Namen Polyetheramine (von BASF) oder unter dem Namen PC Amine^{®} (von Nitroil). Insbesondere geeignete Polyoxyalkylendiamine sind Jeffamine^{®} D-230, Jeffamine^{®} D-400, Jeffamine^{®} D-2000, Jeffamine^{®} EDR-104, Jeffamine^{®} EDR-148 und Jeffamine^{®} EDR-176, sowie entsprechende Amine von BASF oder Nitroil.

Davon bevorzugt sind primäre Diamine **P1** mit einem Molekulargewicht im Bereich von 100 bis 200 g/mol, insbesondere primäre Diamine **P1** ausgewählt aus der Gruppe bestehend aus 1,6-Hexandiamin, 1,5-Diamino-2-methylpentan, 2,2,4- und 2,4,4-Trimethylhexamethylendiamin, Isophorondiamin, 1,3-Bis(aminomethyl)cyclohexan, 1,4-Bis(aminomethyl)cyclohexan, 2- und 4-Methyl-1,3-diaminocyclohexan und Mischungen davon, und 1,3-Bis(aminomethyl)benzol. Die Addukte aus diesen Diaminen sind besonders gut verträglich in Epoxidharz-Produkten.
Davon besonders bevorzugt sind 1,5-Diamino-2-methylpentan und 2,2,4- und 2,4,4-Trimethylhexamethylendiamin. Diese Diamine sind asymmetrisch und weisen zwei unterschiedlich reaktive Aminogruppen auf. Die Addukte aus diesen Diaminen sind besonders niedrigviskos und weisen einen besonders niedrigen Gehalt an unreagiertem primären Diamin **P1** auf, auch wenn sie ohne Destillations-Schritt hergestellt sind.
Am meisten bevorzugt ist 1,5-Diamino-2-methylpentan. Dessen Addukte sind besonders niedrigviskos und gleichzeitig kostengünstig.

Weiterhin bevorzugt sind primäre Diamine **P1** ausgewählt aus der Gruppe bestehend aus 2,2-Dimethyl-1,3-propandiamin, 1,3-Pentandiamin (DAMP), 1,5-Pentandiamin, 1,5-Diamino-2-methylpentan (MPMD) und 1,6-Hexandiamin. Diese primären Diamine **P1** sind besonders geeignet für die Herstellung von Addukten, bei welchen zur Herstellung ein Amin-Überschuss eingesetzt wird, welcher anschliessend an die Adduktierung destillativ entfernt wird.
Davon besonders bevorzugt sind die bezüglich den Aminogruppen unsymmetrischen Diamine 1,3-Pentandiamin (DAMP) und 1,5-Diamino-2-methylpentan (MPMD).

Ein besonders bevorzugtes Addukt ist erhältlich durch Umsetzung von 1,5-Diamino-2-methylpentan und einem Kresylglycidylether in einem Molverhältnis im Bereich von 1/0.9 bis 1/1.2.
Dieses Addukt ist besonders niedrigviskos und besteht aus kostengünstigen Edukten.
Die Adduktierung im diesem Molverhältnis ergibt als Addukt ein Gemisch aus vorwiegend Monoaddukt der Formel (I) und geringen Anteilen von Diaddukt der Formel (II) und unreagiertem 1,5-Diamino-2-methylpentan.
Eine Adduktierung im Molverhältnis von ungefähr 1/1 ergibt ein besonders niedrigviskoses Addukt.
Eine Adduktierung im Molverhältnis von ungefähr 1/1.1 oder 1/1.2 ergibt ein etwas höherviskoses Addukt, welches einen besonders niedrigen Gehalt an freiem 1,5-Diamino-2-methylpentan aufweist, was wegen dessen Flüchtigkeit für den Verarbeiter vorteilhaft ist.

Der beschriebene Härter enthält weiterhin mindestens ein primäres Diamin **P2.** Als primäres Diamin **P2** geeignet sind dieselben primären Diamine, die bereits als geeignete primäre Diamine **P1** erwähnt wurden.
Bevorzugt ist das primäre Diamin **P2** nicht identisch mit dem zur Adduktierung verwendeten primären Diamin **P1.**

Bevorzugte primäre Diamine **P2** weisen ein Molekulargewicht im Bereich von 140 bis 300 g/mol auf. Sie sind insbesondere ausgewählt aus der Gruppe bestehend aus Isophorondiamin, 2,2,4- und 2,4,4-Trimethylhexamethylendiamin, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, 4,7-Dioxadecan-1,10-diamin, Polyoxypropylendiaminen und cycloaliphatischen ethergruppenhaltigen Diaminen aus der Propoxylierung und nachfolgenden Aminierung von 1,4-Dimethylolcyclohexan. Mit diesen Diaminen **P2** werden besonders niedrigviskose Härter für Epoxidharze erhalten, welche besonders gut verträglich in Epoxidharz-Produkten sind und eine schnelle Aushärtung mit kaum Neigung zu Blushing-Effekten ermöglichen.

Davon besonders bevorzugt sind die Polyoxypropylendiamine, insbesondere Jeffamine^{®} D-230 (von Huntsman) und entsprechende Diamine von BASF oder Nitroil, sowie die cycloaliphatischen ethergruppenhaltigen Diamine aus der Propoxylierung und nachfolgenden Aminierung von 1,4-Dimethylolcyclohexan, insbesondere Jeffamine^{®} RFD-270 (von Huntsman).
Diese primären Diamine sind besonders schwerflüchtig und dadurch für den Verarbeiter wenig belastend.

Der beschriebene Härter enthält weiterhin mindestens ein sekundäres Diamin, welches frei von primären Aminogruppen und frei von Hydroxylgruppen ist, und bei welchem es sich nicht um 1,3-Bis(benzylaminomethyl)benzol handelt.
Es übt eine gute verdünnende Wirkung auf das Addukt aus und hat selber keinerlei Neigung zu Blushing-Effekten.
Als sekundäres Diamin bevorzugt sind N,N'-Dialkylierungsprodukte von primären Diaminen, wobei das primäre Diamin bevorzugt ein Molekulargewicht im Bereich von 28 bis 300 g/mol aufweist.

Als sekundäres Diamin besonders bevorzugt sind N,N'-Dialkylierungsprodukte von primären Diaminen **P3,** wobei das primäre Diamin **P3** ausgewählt ist aus der Gruppe bestehend aus 1,6-Hexandiamin, 1,5-Diamino-2-methylpentan, 1,3-Bis(aminomethyl)cyclohexan, 1,4-Bis(aminomethyl)cyclohexan und 1,3-Bis(aminomethyl)benzol.

Diese sekundären Diamine sind niedrigviskos und gut verträglich in Epoxidharz-Zusammensetzungen.
Als sekundäres Diamin am meisten bevorzugt sind N,N'-Dialkylierungsprodukte von 1,3-Bis(aminomethyl)benzol. Härter mit diesen sekundären Diaminen ermöglichen Epoxidharz-Beschichtungen, welche schnell zu besonders schönen, nicht-klebrigen Filmen aushärten, insbesondere auch in der Kälte. Bevorzugt sind die Alkylgruppen in den N,N'-Dialkylierungsprodukten ausgewählt aus der Gruppe bestehend aus 2-Phenylethyl, Benzyl, Isobutyl, Hexyl oder 2-Ethylhexyl.
Diese sekundären Diamine ermöglichen besonders niedrigviskose Härter, welche gut verarbeitbare Epoxidharz-Zusammensetzungen von hoher Härte und geringer Sprödigkeit ermöglichen.

Ein besonders bevorzugtes sekundäres Diamin ist 1,3-Bis(2-ethylhexylaminomethyl)benzol. Es ist insbesondere erhältlich aus der reduktiven Alkylierung von 1,3-Bis(aminomethyl)benzol und 2-Ethylhexanal.
Dieses sekundäre Diamin ist in einem einfachen Prozess in hoher Reinheit herstellbar. Es ermöglicht Härter von überraschend niedriger Viskosität, welche schnell aushärten und kaum Neigung zu Blushing-Effekten aufweisen. Damit erhältliche Epoxidharz-Beschichtungen weisen eine schnelle Aushärtung, insbesondere auch in der Kälte, eine geringe Vergilbungsneigung und eine sehr geringe Sprödigkeit auf.

Ein weiteres besonders bevorzugtes sekundäres Diamin ist 1,3-Bis(2-phenylethylaminomethyl)benzol. Es ist kommerziell erhältlich als Bestandteil von Gaskamine^{®} 240 (von Mitsubishi Gas Chemical). Dieses sekundäre Diamin ermöglicht Härter mit einer schnellen Aushärtung und wenig Neigung zu Blushing-Effekten.

Ein besonders bevorzugter Härter enthält
- mindestens ein Addukt aus 1,5-Diamino-2-methylpentan und Kresylglycidylether,
- mindestens ein primäres Diamin **P2,** und
- mindestens ein N,N'-Dialkylierungsprodukt von 1,3-Bis(aminomethyl)benzol, bei welchem es sich nicht um 1,3-Bis(benzylaminomethyl)benzol handelt, insbesondere ausgewählt aus der Gruppe bestehend aus 1,3-Bis(2-ethylhexylaminomethyl)benzol und 1,3-Bis(2-phenylethylaminomethyl)benzol.

Dieser Härter ist besonders niedrigviskos und besonders gut verträglich mit Epoxidharzen auf Bisphenol A- oder F-Basis.

Im beschriebenen Härter liegen das Addukt, das primäre Diamin **P2** und das sekundäre Diamin bevorzugt in einem solchen Verhältnis vor, dass von der Gesamtzahl ihrer gegenüber Epoxidgruppen reaktiven Aminwasserstoffe
15 bis 75 % aus dem Addukt,
15 bis 60 % aus dem primären Diamin **P2,** und
10 bis 40 % aus dem sekundären Diamin stammen.

Ein solcher Härter weist eine besonders niedrige Viskosität auf und härtet schnell und weitgehend ohne Blushing-Effekte zu ausgehärteten Filmen von hohem Glanz und hoher Härte.

Im beschriebenen Härter liegen das Addukt, das primäre Diamin **P2** und das sekundäre Diamin besonders bevorzugt in einem solchen Verhältnis vor, dass von der Gesamtzahl ihrer gegenüber Epoxidgruppen reaktiven Aminwasserstoffe
15 bis 60 % aus dem Addukt,
25 bis 50 % aus dem primären Diamin **P2,** und
10 bis 35 %, insbesondere 10 bis 20 %, aus dem sekundären Diamin stammen.

Dieser Härter weist eine besonders niedrige Viskosität auf und härtet schnell und weitgehend ohne Blushing-Effekte zu ausgehärteten Filmen von hohem Glanz, hoher Härte und besonders geringer Sprödigkeit.

In einer Ausführungsform enthält der beschriebene Härter weiterhin mindestens ein hydroxylgruppenfreies Diamin mit einer primären und einer sekundären Aminogruppe, insbesondere N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, N-(2-Aminoethyl)piperazin, N-Methyl-1,3-propandiamin, N-Butyl-1,3-propandiamin, N-(2-Ethylhexyl)-1,3-propandiamin, N-Cyclohexyl-1,3-propandiamin, 3-Methylamino-1-pentylamin, 3-Ethylamino-1-pentylamin, 3-Cyclohexylamino-1-pentylamin, Fettdiamine wie N-Cocoalkyl-1,3-propandiamin und Produkte aus der Michael-artigen Additionsreaktion von primären aliphatischen Diaminen mit Acrylnitril, Malein- oder Fumarsäurediestern, Citraconsäurediestern, Acryl- und Methacrylsäureestern, Acryl- und Methacrylsäureamiden und Itaconsäurediestern, umgesetzt im Molverhältnis 1:1, weiterhin Produkte aus der partiellen reduktiven Alkylierung von primären Diaminen mit Aldehyden oder Ketonen, sowie partiell styrolisierte Polyamine, insbesondere Gaskamine^{®} 240 (von Mitsubishi Gas Chemical).
Ein bevorzugtes hydroxylgruppenfreies Diamin mit einer primären und einer sekundären Aminogruppe ist ein N-monoalkyliertes primäres Diamin **P3,** welches insbesondere bei der Alkylierung eines Diamins **P3** mit einer unterstöchiometrischen Menge des Alkylierungsmittels in Bezug auf die primären Aminogruppen des primären Diamins **P3** gebildet wurde.
Ein besonders bevorzugtes hydroxylgruppenfreies Diamin mit einer primären und einer sekundären Aminogruppe ist N-2-Ethylhexyl-1,3-bis(aminomethyl)-benzol, welches insbesondere zusammen mit 1,3-Bis(2-ethylhexylaminomethyl)benzol vorhanden ist. Dieses Diamin ermöglicht niedrigviskose Härter, welche mit Epoxidharzen besonders schnell und mit nur geringer Neigung zu Blushing-Effekte zu Filmen von hohem Glanz, hoher Härte und geringer Vergilbungsneigung aushärten.
Ein weiteres besonders bevorzugtes hydroxylgruppenfreies Diamin mit einer primären und einer sekundären Aminogruppe ist N-2-Phenylethyl-1,3-bis(aminomethyl)benzol, welches als Bestandteil von Gaskamine^{®} 240 (von Mitsubishi Gas Chemical) kommerziell erhältlich ist. Dieses Diamin ermöglicht niedrigviskose Härter, welche mit Epoxidharzen besonders schnell und mit nur geringer Neigung zu Blushing-Effekte zu Filmen von hohem Glanz und hoher Härte aushärten.

In einem solchen Härter liegen das Addukt, das primäre Diamin **P2,** das sekundäre Diamin und das hydroxylgruppenfreie Diamin mit einer primären und einer sekundären Aminogruppe bevorzugt in einem solchen Verhältnis vor, dass von der Gesamtzahl ihrer gegenüber Epoxidgruppen reaktiven Aminwasserstoffe
10 bis 50 % aus dem Addukt,
15 bis 45 % aus dem primären Diamin **P2,** und
20 bis 60 %, insbesondere 20 bis 30 %, aus der Summe aus dem sekundären Diamin und dem hydroxylgruppenfreien Diamin mit einer primären und einer sekundären Aminogruppe stammen.
Ein solcher Härter weist eine niedrige Viskosität auf und härtet mit Epoxidharzen besonders schnell und mit nur geringer Neigung zu Blushing-Effekten zu ausgehärteten Filmen von hohem Glanz und hoher Härte.

Der Härter kann weiterhin Triamine enthalten, insbesondere Tris(2-amino-ethyl)amin, Tris(2-aminopropyl)amin oder Tris(3-aminopropyl)amin, sowie insbesondere Polyoxyalkylentriamine wie insbesondere Jeffamine^{®} T-403, Jeffamine^{®} T-3000, Jeffamine^{®} T-5000 oder entsprechede Amine von BASF oder Nitroil.
Der Härter kann weiterhin sekundäre Aminogruppen aufweisende Polyamine mit zwei primären aliphatischen Aminogruppen enthalten, wie insbesondere 3-(2-Aminoethyl)aminopropylamin, Bis(hexamethylen)triamin (BHMT), Diethylentriamin (DETA), Triethylentetramin (TETA), Tetraethylenpentamin (TEPA), Pentaethylenhexamin (PEHA) und höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Amino-pentyl)-1,3-pentandiamin, N5-(3-Amino-1-ethylpropyl)-2-methyl-1,5-pentandiamin und N,N'-Bis(3-amino-1-ethylpropyl)-2-methyl-1,5-pentandiamin.
Der Härter kann weiterhin aromatische Polyamine enthalten, insbesondere mund p-Phenylendiamin, 4,4'-, 2,4' und 2,2'-Diaminodiphenylmethan, 3,3'-Dichloro-4,4'-diaminodiphenylmethan (MOCA), 2,4- und 2,6-Toluylendiamin, Mischungen von 3,5-Dimethylthio-2,4- und -2,6-toluylendiamin (erhältlich als Ethacure^{®} 300 von Albermarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis(4-aminobenzoat), 1,4-Butylen-bis(4-aminobenzoat), Polytetramethylenoxid-bis(4-aminobenzoat) (erhältlich als Versalink^{®} von Air Products), 1,2-Bis(2-aminophenylthio)ethan, 2-Methylpropyl-(4-chloro-3,5-diaminobenzoat) und tert.Butyl-(4-chloro-3,5-diaminobenzoat).
Der Härter kann weiterhin zusätzliche Addukte enthalten, insbesondere Addukte der genannten Polyamine mit Diepoxiden im Molverhältnis von ungefähr 2/1, Addukte mit Monoepoxiden im Molverhältnis von mindestens 1/1, sowie Umsetzungsprodukte aus Aminen und Epichlorhydrin, insbesondere jenes von 1,3-Bis(aminomethyl)benzol, kommerziell erhältlich als Gaskamine^{®} 328 (von Mitsubishi Gas Chemical).
Der Härter kann weiterhin Polyamidoamine enthalten, welche Umsetzungsprodukte aus einer ein- oder mehrwertigen Carbonsäure, beziehungsweise deren Ester oder Anhydride, insbesondere einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oder TETA, darstellen, insbesondere die kommerziell erhältlichen Polyamidoamine Versamid^{®} 100, 125, 140 und 150 (von Cognis), Aradur^{®} 223, 250 und 848 (von Huntsman), Euretek^{®}3607 und 530 (von Huntsman) und Beckopox^{®} EH 651, EH 654, EH 655, EH 661 und EH 663 (von Cytec).
Der Härter kann weiterhin Phenalkamine, auch Mannich-Basen genannt, welche Umsetzungsprodukte einer Mannich-Reaktion von Phenolen, insbesondere Cardanol, mit Aldehyden, insbesondere Formaldehyd, und Polyaminen darstellen, enthalten, insbesondere die kommerziell erhältlichen Phenalkamine Cardolite^{®} NC-541, NC-557, NC-558, NC-566, Lite 2001 und Lite 2002 (von Cardolite), Aradur^{®} 3440, 3441, 3442 und 3460 (von Huntsman) und Beckopox^{®} EH 614, EH 621, EH 624, EH 628 und EH 629 (von Cytec).
Der Härter kann weiterhin Monoamine wie Hexylamin und Benzylamin enthalten.
Der Härter kann weiterhin Mercaptogruppen aufweisende Verbindungen, enthalten, insbesondere die Folgenden:
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 und LP-2; sowie weiterhin bekannt unter dem Markennamen Thioplast^{®} (von Akzo Nobel), insbesondere die Typen G 10, G 112, G 131, G 1, G 12, G 21, G 22, G 44 und G 4;
- Mercaptan-terminierte Polyoxyalkylen-Ether, erhältlich beispielsweise durch Umsetzung von Polyoxyalkylendi- und -triolen entweder mit Epichlorhydrin oder mit einem Alkylenoxid, gefolgt von Natriumhydrogensulfid;
- Mercaptan-terminierte Verbindungen in Form von Polyoxyalkylen-Derivaten, bekannt unter dem Markennamen Capcure^{®} (von Cognis), insbesondere die Typen WR-8, LOF und 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri-(3-mercaptopropionat) und Glykoldi-(3-mercaptopropionat), sowie die Veresterungsprodukte von Polyoxyalkylendiolen und -triolen, ethoxyliertem Trimethylolpropan und Polyester-Diolen mit Thiocarbonsäuren wie Thioglykolsäure und 2- oder 3-Mercaptopropionsäure; und
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) und Ethandithiol.

Der Härter kann weiterhin mindestens einen Beschleuniger enthalten. Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; weiterhin tertiäre Amine wie insbesondere 1,4-Diazabicyclo[2.2.2]octan, Benzyldimethylamin, α-Methylbenzyldimethylamin, Triethanolamin, Dimethyl-aminopropylamin, Imidazole wie insbesondere N-Methylimidazol, N-Vinylimidazol oder 1,2-Dimethylimidazol, Salze solcher tertiären Amine, quaternäre Ammoniumsalze, wie insbesondere Benzyltrimethylammoniumchlorid, Amidine wie insbesondere 1,8-Diazabicyclo[5.4.0]undec-7-en, Guanidine wie insbesondere 1,1,3,3-Tetramethylguanidin, Phenole, insbesondere Bisphenole, Phenol-Harze und Mannich-Basen wie insbesondere 2-(Dimethylaminomethyl)phenol, 2,4,6-Tris(dimethylaminomethyl)phenol und Polymere aus Phenol, Formaldehyd und N,N-Dimethyl-1,3-propandiamin, Phosphite wie insbesondere Di- und Triphenylphosphite, sowie Mercaptogruppen aufweisende Verbindungen.
Bevorzugte Beschleuniger sind Salicylsäure und/oder 2,4,6-Tris(dimethylaminomethyl)phenol.

Der Härter kann weiterhin mindestens einen nicht einbaubaren Verdünner enthalten, insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol und 8,11,14-Pentadecatrienylphenol (Cardanol, aus Cashewschalen-Öl, erhältlich beispielsweise als Cardolite NC-700 von Cardolite Corp., USA), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- und Sulfonsäureester und Sulfonamide. Bevorzugt sind Benzylalkohol, Dodecylphenol, tert.Butylphenol, styrolisiertes Phenol, ethoxyliertes Phenol und phenolgruppenhaltige aromatische Kohlenwasserstoffharze, insbesondere die Novares^{®}-Typen LS 500, LX 200, LA 300 und LA 700 (von Rütgers).
Bevorzugt enthält der Härter keinen oder nur einen geringen Gehalt an nicht einbaubaren Verdünnern, besonders bevorzugt weniger als 25 Gewichts-%, insbesondere weniger als 10 Gewichts-% und am meisten bevorzugt weniger als 5 Gewichts-%. Insbesondere werden dem Härter keine nicht einbaubaren Verdünner zugesetzt.

Ein weiterer Gegenstand der Erfindung ist eine Epoxidharz-Zusammensetzung, enthaltend mindestens ein Epoxidharz und den vorgängig beschriebenen Härter.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.
Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf.
Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- und 2,2'-Hydroxyphenylmethan.
- Dihydroxybenzol-Derivaten wie Resorcin, Hydrochinon und Brenzkatechin;
- weiteren Bisphenolen oder Polyphenolen wie Bis(4-hydroxy-3-methylphenyl)methan, 2,2-Bis(4-hydroxy-3-methylyphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether und Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P), 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂-bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromo-neopentylglykol, Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Bevorzugte ist das Epoxidharz ein Flüssigharz auf der Basis eines Bisphenols, insbesondere ein Diglycidylether von Bisphenol-A, Bisphenol-F oder Bisphenol-A/F, wie sie kommerziell beispielsweise von Dow, Huntsman und Hexion erhältlich sind. Diese Flüssigharze weisen eine für Epoxidharze niedrige Viskosität und im ausgehärteten Zustand gute Eigenschaften als Beschichtung auf. Sie können gegebenenfalls in Kombination mit Bisphenol A-Festharz oder Bisphenol-F-Novolak-Epoxidharz vorhanden sein.

Das Epoxidharz kann einen Reaktiwerdünner, insbesondere einen mindestens eine Epoxidgruppe aufweisenden Reaktiwerdünner, enthalten. Als Reaktivverdünner geeignet sind beispielsweise die Glycidylether von ein- oder mehrwertigen Phenolen und aliphatischen oder cycloaliphatischen Alkoholen, wie insbesondere die bereits genannten Polyglycidylether von Di- oder Polyolen, sowie weiterhin insbesondere Phenylglycidylether, Kresylglycidylether, Benzylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether oder C₁₂- bis C₁₄-Alkylglycidylether. Die Zugabe eines Reaktivverdünners zum Epoxidharz bewirkt eine Reduktion der Viskosität, sowie eine Reduktion der Glasübergangstemperatur und der mechanischen Werte.

Gegebenenfalls enthält die Epoxidharz-Zusammensetzung weitere Bestandteile, insbesondere in Epoxidharz-Zusammensetzungen üblicherweise eingesetzte Hilfs- und Zusatzstoffe, beispielsweise die Folgenden:
- Lösemittel, Verdünner, Filmbildehilfsmittel oder Extender, wie insbesondere die bereits genannten nicht einbaubaren Verdünner;
- Reaktivverdünner, insbesondere Epoxidgruppen aufweisende Reaktivverdünner, wie sie vorgängig erwähnt wurden, epoxidiertes Sojaöl oder Leinöl, Acetoacetatgruppen aufweisende Verbindungen, insbesondere acetoacetylierte Polyole, Butyrolakton, Carbonate, Aldehyde, sowie weiterhin Isocyanate und Reaktivgruppen-aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere chlorsulfonierte Polyethylene und Fluor-haltige Polymere, Sulfonamid-modifizierte Melamine und gereinigte Montan-Wachse;
- anorganische und organische Füllstoffe, zum Beispiel gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Eisenglimmer, Dolomite, Wollastonite, Kaoline, Mica (Kalium-Aluminium-Silikat), Molekularsiebe, Aluminiumoxide, Aluminiumhydroxide, Magnesiumhydroxid, Kieselsäuren, Zemente, Gipse, Flugaschen, Russ, Graphit, Metall-Pulver wie Aluminium, Kupfer, Eisen, Zink, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid und Eisenoxide;
- die vorgenannten Beschleuniger;
- Rheologie-Modifizierer, insbesondere Verdicker oder Antiabsetzmittel;
- Haftverbesserer, insbesondere Organoalkoxysilane;
- Stabilisatoren gegen Oxidation, Wärme, Licht und UV-Strahlung;
- flammhemmende Substanzen, insbesondere Aluminiumhydroxid (ATH), Magnesiumdihydroxid (MDH), Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinol-diphosphat-Oligomer, Tetraphenylresorcinoldiphosphit, Ethylendiamindiphosphat und Bisphenol-A-bis(diphenylphosphat), Tris(chloroethyl)phosphat, Tris(chloropropyl)phosphat und Tris(dichloroisopropyl)phosphat, Tris[3-bromo-2,2-bis(bromomethyl)propyl)phosphat, Tetrabromo-Bisphenol-A, Bis(2,3-dibromopropylether) von Bisphenol A, bromierte Epoxidharze, Ethylen-bis-(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan und Chlorparaffine;
- oberflächenaktive Substanzen, insbesondere Netzmittel, Verlaufsmittel, Entlüftungsmittel und Entschäumer;
- Biozide, wie beispielsweise Algizide, Fungizide oder das Pilzwachstum hemmende Substanzen.

Bevorzugt enthält die Epoxidharz-Zusammensetzung weitere Hilfs- und Zusatzstoffe, insbesondere Netzmittel, Verlaufsmittel, Entschäumer, Stabilisatoren, Pigmente und Katalysatoren, insbesondere Salicylsäure oder 2,4,6-Tris(dimethylaminomethyl)phenol.
Bevorzugt enthält die Epoxidharz-Zusammensetzung keinen oder nur einen geringen Gehalt an nicht einbaubaren Verdünnern, besonders bevorzugt weniger als 10 Gewichts-%, insbesondere weniger als 5 Gewichts-%, am meisten bevorzugt weniger als 2 Gewichts-%.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.
Die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis dieser Reaktionen polymerisiert die Zusammensetzung und härtet schliesslich aus. Dem Fachmann ist bekannt, dass primäre Aminogruppen gegenüber Epoxidgruppen difunktionell sind und eine primäre Aminogruppe somit als zwei gegenüber Epoxidgruppen reaktive Gruppen zählt.

Insbesondere ist die Epoxidharz-Zusammensetzung eine zweikomponentige Zusammensetzung, bestehend aus
(i) einer Harz-Komponente enthaltend mindestens ein Epoxidharz und
(ii) einer Härter-Komponente enthaltend den beschriebenen Härter.

Die Komponenten der zweikomponentigen Zusammensetzung werden jeweils in einem eigenen Gebinde gelagert. Weitere Bestandteile der zweikomponentigen Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der zweikomponentigen Epoxidharz-Zusammensetzung werden die Harz- und die Härter-Komponente kurz vor oder während der Applikation miteinander vermischt. Das Mischungsverhältnis zwischen den beiden Komponenten wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.
Die Vermischung der beiden Komponenten erfolgt mittels eines geeigneten Verfahrens; sie kann kontinuierlich oder batchweise erfolgen. Falls das Vermischen vor der Applikation erfolgt, muss darauf geachtet werden, dass zwischen dem Vermischen der Komponenten und der Applikation nicht zu viel Zeit vergeht, da es dadurch zu Störungen, wie beispielsweise einem verlangsamten oder unvollständigen Aufbau der Haftung zum Substrat, kommen kann. Die Vermischung erfolgt insbesondere bei Umgebungstemperatur, welche typischerweise im Bereich von etwa 5 bis 50°C, bevorzugt bei etwa 10 bis 30°C, liegt.
Mit der Vermischung der beiden Komponenten beginnt die Aushärtung durch chemische Reaktion, wie vorgängig beschrieben. Die Aushärtung erfolgt insbesondere bei Umgebungstemperatur. Sie erstreckt sich typischerweise über einige Tage bis Wochen, bis sie unter den gegebenen Bedingungen weitgehend abgeschlossen ist. Die Dauer hängt unter anderem von der Temperatur, der Reaktivität der Bestandteile und deren Stöchiometrie sowie der Gegenwart von Beschleunigern ab.
Ein weiterer Gegenstand der Erfindung ist somit auch eine ausgehärtete Zusammensetzung erhalten aus der Aushärtung einer Epoxidharz-Zusammensetzung wie im vorliegenden Dokument beschrieben.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, inklusive oberflächenveredelte Metalle und Legierungen, wie verzinkte und verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, insbesondere Hart- und Weich-PVC, ABS, Polycarbonat (PC), Polyamid (PA), Polyester, PMMA, Epoxidharze, PUR, POM, PO, PE, PP, EPM und EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke.

Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten und/oder Abblasen, sowie weiterhin Behandeln mit Reinigern oder Lösemitteln oder das Aufbringen eines Haftvermittlers, einer Haftvermittlerlösung oder eines Primers.

Die beschriebene Epoxidharz-Zusammensetzung ist vorteilhaft verwendbar als Faserverbundwerkstoff (Composite), Vergussmasse, Dichtstoff, Klebstoff, Belag, Beschichtung, Anstrich, Lack, Versiegelung, Grundierung oder Primer. Insbesondere verwendbar ist sie als Vergussmasse, Dichtstoff und Klebstoff, wie beispielsweise als Elektrovergussmasse, Abdichtungsmasse, Karrosserieklebstoff, Sandwichelementklebstoff, Halbschalenklebstoff, beispielsweise für Rotorblätter von Windkraftanlagen, Brückenelementklebstoff oder Verankerungsklebstoff; sowie weiterhin als Belag, Beschichtung, Anstrich, Lack, Versiegelung, Grundierung und Primer für Bau- und Industrieanwendungen, wie insbesondere als Bodenbelag und Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden; sowie weiterhin als Voranstrich, Haftanstrich, Korrosionsschutz-Primer oder zur Hydrophobierung von Oberflächen. Auf die vollständig oder teilweise ausgehärtete Epoxidharz-Zusammensetzung kann insbesondere bei ihrer Verwendung als Beschichtung, Belag oder Anstrich eine weitere Beschichtung, ein weiterer Belag, oder ein weiterer Anstrich appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Besonders vorteilhaft verwendbar ist die beschriebene Epoxidharz-Zusammensetzung als Beschichtung. Als Beschichtung werden dabei flächig aufgebrachte Beläge aller Art verstanden, insbesondere auch Anstriche, Lacke, Versiegelungen, Grundierungen und Primer, wie vorgängig beschrieben. Insbesondere vorteilhaft verwendbar ist die beschriebene Epoxidharz-Zusammensetzung in emissionsarmen Produkten mit Öko-Gütesiegeln, beispielsweise nach Emicode (EC1 Plus), AgBB, DIBt, Der Blaue Engel, AFSSET, RTS (M1) und US Green Building Council (LEED).

Als Beschichtung wird die Epoxidharz-Zusammensetzung vorteilhaft in einem Verfahren zum Beschichten verwendet, wobei sie eine flüssige Konsistenz mit niedriger Viskosität und guten Verlaufseigenschaften aufweist und insbesondere als selbstverlaufende Beschichtung auf überwiegend ebene Flächen oder als Anstrich appliziert werden kann. Bevorzugt weist die Epoxidharz-Zusammensetzung bei dieser Applikation unmittelbar nach dem Vermischen der Harz- und der Härter-Komponente eine Viskosität, gemessen bei 20°C, im Bereich von 300 bis 2'000 mPa·s, bevorzugt im Bereich von 300 bis 1'500 mPa·s, besonders bevorzugt im Bereich von 300 bis 1'200 mPa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann aber auch mit einem Pinsel oder Roller oder als Spritzapplikation erfolgen, beispielsweise als Korrosionsschutzbeschichtung auf Stahl.
Bei der Aushärtung entstehen typischerweise weitgehend klare, glänzende und nichtklebrige Filme von hoher Härte und geringen Sprödigkeit, welche eine gute Haftung zu verschiedensten Substraten aufweisen.
Eine Film von hoher Härte und geringer Sprödigkeit weist bevorzugt eine Königshärte (Pendelhärte nach König, gemessen nach DIN EN ISO 1522) im Bereich von 100 bis 200 s, insbesondere 120 bis 180 s, auf. Eine noch höhere Königshärte weist typischerweise auch eine erhöhte Sprödigkeit auf, und eine geringere Königshärte ist zu weich für viele Beschichtungsanwendungen.

Ein weiterer Gegenstand der Erfindung ist ein Artikel enthaltend eine ausgehärtete Zusammensetzung, erhalten durch die Aushärtung der beschriebenen Epoxidharz-Zusammensetzung. Die ausgehärtete Zusammensetzung liegt dabei insbesondere in Form einer Beschichtung vor.

Die beschriebene Epoxidharz-Zusammensetzung zeichnet sich durch vorteilhafte Eigenschaften aus. Sie ist niedrigviskos und härtet auch bei feuchtkalten Bedingungen schnell und weitgehend ohne Blushing-Effekte aus, wobei nichtklebrige klare Filme von hoher Härte und geringer Sprödigkeit entstehen, sogar mit geringen Anteilen oder ganz ohne die Verwendung von nicht einbaubaren Verdünnern, und insbesondere auch mit nur geringen Anteilen oder ganz ohne die Verwendung von flüchtigen primären Diaminen. Mit der beschriebenen Epoxidharz-Zusammensetzung sind insbesondere emissionsarme Epoxidharz-Produkte zugänglich, welche die Bedingungen für viele Öko-Gütesiegel erfüllen und gleichzeitig hohen Ansprüchen bezüglich Arbeitssicherheit, Verarbeitungs- und Gebrauchseigenschaften genügen. Durch geschicktes Verwenden von flüchtigen primären Diaminen in Form des Adduktes und/oder in N,N'-dialkylierter Form, kombiniert mit weniger flüchtigen primären Diaminen, sind insbesondere kostengünstige, in der Epoxidharz-Industrie bekannte und bewährte primäre Diamine, wie insbesondere MPMD oder MXDA, verwendbar, welche in freier Form aufgrund von immer strengeren Vorschriften in immer geringeren Mengen toleriert werden.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.
"MGC" steht für "Mitsubishi Gas Chemical".
"sek. Diamin" steht für "sekundäres Diamin".

### 1. Beschreibung der Messmethoden

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

Der **Amingehalt,** das heisst der totale Gehalt an Aminogruppen in den hergestellten Verbindungen, wurde titrimetrisch bestimmt (mit 0.1NHClO₄ in Eisessig, gegen Kristallviolett) und ist stets angegeben in mmol N/g.

### 2. verwendete kommerzielle Substanzen:

| | |
|---|---|
| Araldite^{®} DY-K: | (von Huntsman), Kresylglycidylether, EEW ca. 182 g/Eq |
| Araldite^{®} DY-P: | (von Huntsman), p-tert.Butylphenylglycidylether, EEW ca. 233 g/Eq |
| Araldite^{®} GY 250: | (von Huntsman), Bisphenol-A-Diglycidylether,EEW ca. 187.5 g/Eq |
| Araldite^{®} DY-E: | (von Huntsman), Monoglycidylether eines C₁₂- bis C₁₄-Alkohols, EEW ca. 290 g/Eq |
| Ancamine^{®} K 54: | (von Air Products), 2,4,6-Tris(dimethylaminomethyl)phenol |
| Dytek^{®} A: | (von Invista),1,5-Diamino-2-methylpentan |
| Dytek^{®} EP: | (von Invista),1,3-Pentandiamin |
| Vestamin^{®} TMD: | (von Evonik), 2,2,4- und 2,4,4-Trimethylhexamethylendiamin, AHEW ca. 39.6 g/Eq, abgekürzt *"TMD"* |
| 1,3-BAC: | (von MGC), 1,3-Bis(aminomethyl)cyclohexan, AHEW ca. 35.5 g/Eq, abgekürzt ***"3BAC"*** |
| MXDA: | (von MGC), 1,3-Bis(aminomethyl)benzol, abgekürzt ***"MXDA"*** |
| DETA: | (von Huntsman), Diethylentriamin |
| Gaskamine^{®} 240. | (von MGC), styrolisiertes 1,3-Bis(aminomethyl)benzol, AHEW ca. 103 g/Eq, abgekürzt ***"240"*** |
| Jeffamine^{®} RFD-270: | (von Huntsman), cycloaliphatisches ethergruppenhaltiges Diamin aus der Propoxylierung und nachfolgenden Aminierung von 1,4-Dimethylolcyclohexan, mittleres Molekulargewicht ca. 270 g/mol, AHEW ca. 67 g/Eq, abgekürzt *"RFD"* |
| Jeffamine^{®} EDR-176: | (von Huntsman), 4,7=Dioxa-1,10-decandiamin, AHEW ca. 44 g/Eq, abgekürzt ***"EDR"*** |
| Jeffamine^{®} D-230: | (von Huntsman), Polyoxypropylendiamin mit mittlerem Molekulargewicht ca. 240 g/mol, AHEW ca. 60 g/Eq, abgekürzt ***"D230"*** |
| Jeffamine^{®} XTA-801: | (von Huntsman), 1,4-Bis(aminomethyl)cyclohexan, AHEW ca. 39.5 g/Eq, abgekürzt ***"4BAC"*** |
| Vestamin^{®} IPD: | (von Evonik),); Isophorondiamin, AHEW ca. 42.6 g/Eq, abgekürzt ***"IPD"*** |
| Amicure^{®} PACM: | (von Air Products), 4,4'-Diaminodicyclohexylmethan, AHEW ca. 52.5 g/Eq, abgekürzt ***"PACM"*** |
| Baxxodur™ EC 331: | (von BASF), 3,3'-Dimethyl-4,4'-diaminodicyclohexylmethan, AHEW ca. 61 g/Eq, abgekürzt ***"EC331"*** |

### 3. Herstellung von Addukten:

Addukt **A-1:**
   182.0 g (1 mol) Araldite^{®} DY-K wurden mit 116.0 g (1 mol) Dytek^{®} A gut vermischt, in einem verschlossenen Gefäss während 2 Stunden auf 60 °C aufgeheizt und anschliessend auf Raumtemperatur abgekühlt und verschlossen aufbewahrt. Es wurde eine klare, leicht gelbliche Flüssigkeit mit einer Viskosität bei 20 °C von 5.8 Pa·s, einer Aminzahl von 377 mg KOH/g und einem theoretischen AHEW von ca. 99.4 g/Eq erhalten.
Addukt **A-2:**
   Wie für Addukt A-1 beschrieben wurden 200.2 g (1.1 mol) Araldite^{®} DY-K mit 116.0 g (1 mol) Dytek^{®} A umgesetzt. Es wurde eine klare, leicht gelbliche Flüssigkeit mit einer Viskosität bei 20 °C von 13.1 Pa·s, einer Aminzahl von 355 mg KOH/g und einem theoretischen AHEW von ca. 109.1 g/Eq erhalten.
Addukt **A-3:**
   Wie für Addukt A-1 beschrieben wurden 182.0 g (1 mol) Araldite^{®} DY-K mit 158.3 g (1 mol) Vestamin^{®} TMD umgesetzt. Es wurde eine klare, leicht gelbliche Flüssigkeit mit einer Viskosität bei 20 °C von 6.4 Pa·s, einer Aminzahl von 332 mg KOH/g und einem theoretischen AHEW von ca. 113.4 g/Eq erhalten.
Addukt **A-4:**
   Wie für Addukt A-1 beschrieben wurden 182.0 g (1 mol) Araldite^{®} DY-K mit 142.0 g (1 mol)1,3-BAC umgesetzt. Es wurde eine klare, leicht gelbliche Flüssigkeit mit einer Viskosität bei 20 °C von 74.8 Pa·s, einer Aminzahl von 347 mg KOH/g und einem theoretischen AHEW von ca. 108.0 g/Eq erhalten.
Addukt **A-5:**
   Wie für Addukt A-1 beschrieben wurden 182.0 g (1 mol) Araldite^{®} DY-K mit 136.2 g (1 mol) MXDA umgesetzt. Es wurde eine klare, leicht gelbliche Flüssigkeit mit einer Viskosität bei 20 °C von 28.1 Pa·s, einer Aminzahl von 344 mg KOH/g und einem theoretischen AHEW von ca. 106.1 g/Eq erhalten.
Addukt **A-6:**
   Wie für Addukt A-1 beschrieben wurden 182.0 g (1 mol) Araldite^{®} DY-K mit 103.1 g (1 mol) DETA umgesetzt. Es wurde eine klare, leicht gelbliche Flüssigkeit mit einer Viskosität bei 20 °C von 10.3 Pa·s, einer Aminzahl von 578 mg KOH/g und einem theoretischen AHEW von ca. 71.3 g/Eq erhalten.
Addukt **A-7:**
   30.7 g (0.3 mol) Dytek^{®} EP wurden vorgelegt und aufgewärmt. Unter Stickstoffatmosphäre und gutem Rühren wurden bei einer Temperatur von 80 °C innerhalb von 40 Minuten langsam 18.2 g (1.0 mol) Araldite^{®} DY-K zugegeben, wobei darauf geachtet wurde, dass die Temperatur der Reaktionsmischung nicht über 85 °C stieg. Die Reaktionsmischung wurde während 3 Stunden bei 80°C belassen. Anschliessend wurden am Rotationsverdampfer bei 90 °C und 1 mbar die flüchtigen Bestandteile entfernt. Nach 5 Stunden waren 94 Gewichtsprozent des überschüssigen Amins entfernt. Die Reaktionsmischung wurde abgekühlt und verschlossen aufbewahrt. Es wurde eine klare, leicht gelbliche Flüssigkeit mit einer Viskosität von 3.6 Pa·s, einer Aminzahl von 417.5 mg KOH/g und einem theoretischen AHEW von ca. 94.7 g/Eq erhalten.
Addukt **A-8:**
   Wie für Addukt A-7 beschrieben wurden 34.9 g (0.3 mol) Dytek^{®} A mit 18.2 g (1.0 mol) Araldite^{®} DY-K umgesetzt. Nach 6 Stunden bei 90 °C und 24 Stunden bei 60 °C am Rotationsverdampfer waren 92 Gewichtsprozent des überschüssigen Amins entfernt. Die Reaktionsmischung wurde abgekühlt und verschlossen aufbewahrt. Es wurde eine klare, leicht gelbliche Flüssigkeit mit einer Viskosität von 10.9 Pa·s, einer Aminzahl von 356.7 mg KOH/g und einem theoretischen AHEW von ca. 99.4 g/Eq erhalten.

### 4. Herstellung von sekundären Diaminen:

sek. Diamin **S-1:** 1,3-Bis(2-ethylhexylaminomethyl)benzol In einem Rundkolben wurden 25.6 g (0.20 mol) 2-Ethylhexanal und 13.6 g (0.10 mol) MXDA unter Stickstoffatmosphäre in ausreichend Isopropanol gelöst. Die Lösung wurde während 30 Minuten bei Raumtemperatur gerührt und anschliessend bei einem Wasserstoff-Druck von 80 bar, einer Temperatur von 80 °C und einem Fluss von 3 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die Lösung im Vakuum bei 80 °C eingeengt. Erhalten wurde eine klare, leicht gelbliche Flüssigkeit mit einer Viskosität von 140 mPa·s bei 20 °C, einem Amingehalt von 5.50 mmol N/g und einem theoretischen AHEW von ca. 180.3 g/Eq.
sek. Diamin **S-2:** Reaktionsgemisch enthaltend 1,3-Bis(2-ethylhexylaminomethyl)benzol und N-2-Ethylhexyl-1,3-bis(aminomethyl)benzol Auf die gleiche Weise wie für das sek. Diamin **S-1** beschrieben wurden 20.5 g (0.16 mol) 2-Ethylhexanal und 13.6 g (0.10 mol) MXDA umgesetzt. Erhalten wurde eine klare, leicht gelbliche Flüssigkeit mit einem Gehalt an 1,3-Bis(2-ethylhexylaminomethyl)benzol von 66.4 Gewichts-% und einem Gehalt an N-2-Ethylhexyl-1,3-bis(aminomethyl)benzol von 30.1 Gewichts-% (bestimmt mittels Gas-Chromatographie), einer Viskosität von 100 mPa·s bei 20 °C, einem Amingehalt von 6.39 mmol N/g und einem theoretischen AHEW von ca. 130.2 g/Eq.
sek. Diamin **S-3:** 1,3-Bis(2-methylpropylaminomethyl)benzol Auf die gleiche Weise wie für das sek. Diamin **S-1** beschrieben wurden 14.4 g (0.20 mol) Isobutyraldehyd und 13.6 g (0.10 mol) 1,3-Bis(aminomethyl)benzol umgesetzt. Erhalten wurde eine klare, leicht gelbliche Flüssigkeit mit einer Viskosität von 100 mPa·s bei 20 °C, einem Amingehalt von 6.37 mmol N/g und einem theoretischen AHEW von ca. 124.0 g/Eq.
sek. Diamin **S-4:** N,N'-Bis(2-ethylhexyl)-1,5-diamino-2-methylpentan Auf die gleiche Weise wie für das sek. Diamin **S-1** beschrieben wurden 25.6 g (0.20 mol) 2-Ethylhexanal und 11.6 g (0.10 mol) Dytek^{®} A umgesetzt. Erhalten wurde eine klare, leicht gelbliche Flüssigkeit mit einer Viskosität von 140 mPa·s bei 20 °C, einem Amingehalt von 5.80 mmol N/g und einem theoretischen AHEW von ca. 170.3 g/Eq.
sek. Diamin **S-5:** N,N'-Bis(2-ethylhexyl)-1,6-hexandiamin Auf die gleiche Weise wie für das sek. Diamin **S-1** beschrieben wurden 25.6 g (0.20 mol) 2-Ethylhexanal und 16.6 g (0.10 mol) 1,6-Hexandiamin, 70 Gewichts-% in Wasser, umgesetzt. Erhalten wurde eine klare, leicht gelbliche Flüssigkeit mit einer Viskosität von 130 mPa·s bei 20 °C, einem Amingehalt von 6.24 mmol N/g und einem theoretischen AHEW von ca. 170.3 g/Eq.
sek. Diamin **S-6:** Reaktionsgemisch enthaltend N,N'-Dibenzyl-1,5-diamino-2-methylpentan und N-Benzyl-1,5-diamino-2-methylpentan Auf die gleiche Weise wie für das sek. Diamin **S-1** beschrieben wurden 17.0 g (0.16 mol) Benzaldehyd und 11.6 g (0.10 mol) Dytek^{®} A umgesetzt. Erhalten wurde eine klare, leicht gelbliche Flüssigkeit mit einer Viskosität von ca. 0.1 mPa·s bei 20 °C, einem Amingehalt von 9.18 mmol N/g und einem theoretischen AHEW von ca. 107.2 g/Eq.

### 5. Herstellung von Härtern und Epoxidharz-Zusammensetzungen

Für jedes Beispiel wurden die in den Tabellen 1 bis 6 angegebenen Inhaltesstoffe in den angegebenen Mengen (in Gewichtsteilen) der Härter-Komponente mittels eines Zentrifugalmischers (SpeedMixer™ DAC 150, FlackTek Inc.) vermischt und unter Ausschluss von Feuchtigkeit aufbewahrt.

Ebenso wurden die in den Tabellen 1 bis 6 angegebenen Inhaltsstoffe der Harz-Komponente verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:
10 Minuten nach dem Vermischen wurde die Viskosität bei 20°C bestimmt **("Viskosität (10')**").

Ein erster Film wurde in einer Schichtdicke von 500 µm auf eine Glasplatte aufgezogen und dieser bei 23±1 °C und 50±5 % relativer Feuchtigkeit (= Normklima, im folgenden abgekürzt mit "NK") gelagert, beziehungsweise ausgehärtet. An diesem Film wurde die **Königshärte** (Pendelhärte nach König, gemessen nach DIN EN ISO 1522) nach 2 Tagen ("Königshärte (2d NK)") bzw. nach 4 Tagen ("Königshärte (4d NK)") bzw. nach 7 Tagen ("Königshärte (7d NK)") bzw. nach 4 Wochen ("Königsh. (NK) (4w)") bestimmt. Nach 4 Wochen wurde der Aspekt des Films beurteilt (in der Tabelle mit "Aspekt (NK)" bezeichnet). Als "schön" wurde dabei ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet.

Ein zweiter Film wurde in einer Schichtdicke von 500 µm auf eine Glasplatte aufgezogen und dieser unmittelbar nach dem Applizieren während 7 Tagen bei 8 °C und 80 % relativer Feuchtigkeit und anschliessend während 3 Wochen im NK gelagert, beziehungsweise ausgehärtet. 24 Stunden nach der Applikation wurde ein Flaschendeckel aus Polypropylen auf den Film aufgesetzt, unter welchem ein feuchtes Schwämmchen platziert war. Nach weiteren 24 Stunden wurde das Schwämmchen und der Deckel entfernt und an einer neuen Stelle des Films platziert, wo es nach 24 Stunden wieder entfernt und neu platziert wurde, insgesamt 4 mal. Anschliessend wurde der Aspekt dieses Films beurteilt (in den Tabellen mit "Aspekt (8°/80%)" bezeichnet), auf die gleiche Weise wie für den Aspekt (NK) beschrieben. Dabei wurde jeweils auch die Anzahl Markierungen angegeben, die im Film durch das feuchte Schwämmchen und/ oder den aufgesetzten Deckel sichtbar waren. Trat an der Markierung eine weisse Verfärbung oder Trübung auf, so ist dies ebenfalls angegeben. An den so ausgehärteten Filmen wurde wiederum die Königshärte bestimmt, jeweils nach 7 Tagen bei 8 °C und 80 % relativer Feuchtigkeit ("Königsh. (7d 8°/80%)"), dann nach weiteren 2 Tagen im NK ("Königsh. (+2d NK)") bzw. 7 Tagen im NK ("Königsh. (+7d NK)") bzw. 3 Wochen im NK ("Königsh. (+3w NK)").

Die Resultate sind in den Tabellen 1 bis 6 angegeben.

Bei den Epoxidharz-Zusammensetzungen ***EZ-1*** bis ***EZ-31*** handelt es sich um erfindungsgemässe Beispiele. Bei den Epoxidharz-Zusammensetzungen ***Ref-1*** bis ***Ref-6*** handelt es sich um Vergleichsbeispiele.

**Tabelle 1: Zusammensetzung und Eigenschaften von EZ-1 bis EZ-7.**

| **Beispiel** | | | | ***EZ-1*** | ***EZ-2*** | ***EZ-3*** | ***EZ-4*** | ***EZ-5*** | ***EZ-6*** | ***EZ-7*** |
|---|---|---|---|---|---|---|---|---|---|---|
| **Harz-Komp.:** | | | | | | | | | | |
| | Araldite^{®} GY-250 | | | 167.2 | 167.2 | 167.2 | 167.2 | 167.2 | 167.2 | 167.2 |
| | . Araldite^{®} DY-E | | | 31.8 | 31.8 | 31.8 | 31.8 | 31.8 | 31.8 | 31.8 |
| **Härter-Komp.:** | | | | | | | | | | |
| | Addukt **A-1** | | | 49.7 | 59.6 | 49.7 | 49.7 | 59.6 | 59.6 | 49.7 |
| | primäres Diamin | | | ***RFD*** | ***3BAC*** | ***TMD*** | ***IPD*** | ***EDR*** | ***D230*** | ***PACM*** |
| | | | | 22.3 | 9.5 | 13.2 | 14.2 | 13.2 | 18.0 | 17.5 |
| | sek. Diamin **S-1** | | | 30.1 | 23.9 | 30.1 | 30.1 | 18.0 | 18.0 | 30.1 |
| | Ancamine^{®} K 54 | | | 6.0 | 5.8 | 5.8 | 5.9 | 5.8 | 5.9 | 5.9 |
| | | | | | | | | | | |
| | | | A | 50 | 60 | 50 | 50 | 60 | 60 | 50 |
| %-Anteile NH-Eq¹ | | | P | 33 | 27 | 33 | 33 | 30 | 30 | 33 |
| | | | S | 17 | 13 | 17 | 17 | 10 | 10 | 17 |
| | | | | | | | | | | |
| Viskosität (10') [Pa·s] | | | | 0.91 | 1.31 | 0.88 | 0.50 | 1.21 | 1.03 | 1.13 |
| Königshärte | | (2d NK) | | 120 | 125 | 101 | 129 | 102 | 137 | 150 |
| [s] | | (4d NK) | | 141 | 144 | 109 | 155 | 118 | 154 | 169 |
| | | (7d NK) | | 151 | 158 | 115 | 168 | 129 | 164 | 157 |
| | | (4w NK) | | 170 | 166 | 115 | 190 | 137 | 168 | 192 |
| Aspekt (NK) | | | | schön | I. matt | schön | ok | I. matt | schön | schön |
| Königsh. (7d 8°/80%) | | | | 52 | 53 | 60 | 60 | 35 | 46 | 59 |
| [s] | | (+2d NK) | | 91 | 115 | 101 | 110 | 93 | 123 | 137 |
| | | (+7d NK) | | 126 | 143 | 120 | 139 | 120 | 165 | 135 |
| | | (+3w NK) | | 155 | 145 | 133 | 160 | 142 | 168 | 175 |
| Aspekt (8°/80%) Anzahl Markierungen | | | | schön 1 (schw.) | matt 1 (weiss) | schön 1 (weiss) | matt 1 (weiss) | I. Struktur keine | I. matt 1 (schw.) | I. matt 1 (schw.) |

| | | | | | | | | | | |
|---|---|---|---|---|---|---|---|---|---|---|
| "I." steht für "leicht"; "schw." steht für "schwach" ¹ %-Anteile der Anzahl Aminwasserstoffe aus dem Addukt ("A"), dem primären Diamin ("P") und den sekundären Diamin ("S"). | | | | | | | | | | |

**Tabelle 2: Zusammensetzung und Eigenschaften von EZ-8 bis EZ-14.**

| **Beispiel** | | | ***EZ-8*** | ***EZ-9*** | ***EZ-10*** | ***EZ-11*** | ***EZ-12*** | ***EZ-13*** | ***EZ-14*** |
|---|---|---|---|---|---|---|---|---|---|
| **Harz-Komp.:** | | | | | | | | | |
| | Araldite^{®} GY-250 | | 167.2 | 167.2 | 167.2 | 167.2 | 167.2 | 167.2 | 167.2 |
| | Araldite^{®} DY-E | | 31.8 | 31.8 | 31.8 | 31.8 | 31.8 | 31.8 | 31.8 |
| **Härter-Komp.:** | | | | | | | | | |
| | Addukt **A-1** | | 49.7 | 49.7 | 49.7 | 49.7 | 49.7 | 49.7 | 49.7 |
| | primäres Diamin | | ***EC331*** 20.3 | ***4BAC*** 13.2 | ***MXDA*** 11.3 | ***RFD*** 22.3 | ***RFD*** 22.3 | ***RFD*** 22.3 | ***RFD*** 22.3 |
| | sek. Diamin | | **S-1** | **S-1** | **S-1** | **S-2** | **S-3** | **S-4** | **S-5** |
| | | | 30.1 | 30.1 | 30.1 | 21.7 | 20.7 | 28.4 | 28.4 |
| | Ancamine^{®} K 54 | | 6.0 | 5.8 | 5.8 | 5.8 | 5.9 | 6.0 | 6.0 |
| | | | | | | | | | |
| Viskosität (10') [Pa·s] | | | 0.77 | 0.57 | 0.45 | 1.19 | 1.26 | 1.01 | 0.98 |
| Königshärte | | (2d NK) | 140 | 119 | 113 | 135 | 123 | 105 | 91 |
| [s] | | (4d NK) | 162 | 139 | 127 | 148 | 137 | 123 | 110 |
| | | (7d NK) | 167 | 139 | 130 | 160 | 147 | 140 | 125 |
| | | (4w NK) | 190 | 169 | 144 | 199 | 186 | 142 | 132 |
| Aspekt (NK) | | | schön | schön | schön | schön | trüb | schön | schön |
| Königsh. (7d 8°/80%) | | | 59 | 50 | 69 | 64 | 57 | 38 | 38 |
| [s] | | (+2d NK) | 119 | 109 | 78 | 148 | 126 | 83 | 84 |
| | | (+7d NK) | 148 | 77 | 79 | 171 | 145 | 118 | 109 |
| | | (+3w NK) | 167 | 116 | 90 | 175 | 167 | 130 | 125 |
| Aspekt (8°/80%) | | | schön | trüb | matt | I. matt | trüb, I. matt | I. matt | schön |
| Anzahl Markierungen | | | 1 (weiss) | 1 (weiss) | 2 (schw.) | 1 (schw.) | 1 (weiss) | keine | 1 (schw.) |

| | | | | | | | | | |
|---|---|---|---|---|---|---|---|---|---|
| "I." steht für "leicht"; "schw." steht für "schwach" | | | | | | | | | |

**Tabelle 3: Zusammensetzung und Eigenschaften von EZ-15 bis EZ-21.**

| **Beispiel** | | | ***EZ-15*** | ***EZ-16*** | ***EZ-17*** | ***EZ-18*** | ***EZ-19*** | ***EZ-20*** | ***EZ-21*** |
|---|---|---|---|---|---|---|---|---|---|
| | **Harz-Komp.:** | | | | | | | | |
| | Araldite^{®} GY-250 | | 167.2 | 167.2 | 167.2 | 167.2 | 167.2 | 167.2 | 167.2 |
| | Araldite^{®} DY-E | | 31.8 | 31.8 | 31.8 | 31.8 | 31.8 | 31.8 | 31.8 |
| | **Härter-Komp.:** | | | | | | | | |
| | Addukt | | **A-1** | **A-2** | **A-2** | **A-2** | **A-3** | **A-4** | **A-5** |
| | | | 49.7 | 54.6 | 54.6 | 43.6 | 56.7 | 54.0 | 53.1 |
| | primäres Diamin | | ***RFD*** | ***RFD*** | ***RFD*** | ***D230*** | ***RFD*** | ***RFD*** | ***RFD*** |
| | | | 22.3 | 16.8 | 20.1 | 18.0 | 22.3 | 22.3 | 22.3 |
| | sek. Diamin | | ***240*** | **S-1** | **S-2** | ***240*** | **S-1** | **S-1** | **S-1** |
| | | | 17.2 | 27.0 | 26.0 | 30.9 | 30.1 | 30.1 | 30.1 |
| | Ancamine^{®} K 54 | | 5.8 | 6.0 | 6.0 | 5.8 | 6.2 | 6.1 | 6.1 |
| | | | | | | | | | |
| Viskosität (10') [Pa·s] | | | 1.46 | 1.31 | 1.07 | 1.05 | 1.12 | 1.45 | 1.32 |
| Königsh. | | (2d NK) | 143 | 102 | 121 | 136 | 109 | 141 | 125 |
| [s] | | (4d NK) | 176 | 139 | 147 | 144 | 144 | 169 | 155 |
| | | (7d NK) | 193 | 150 | 161 | 183 | 165 | 185 | 165 |
| | | (4w NK) | 209 | 179 | 180 | 198 | 176 | 186 | 176 |
| Aspekt (NK) | | | schön | schön | schön | schön | schön | I. Zeichn. | schön |
| Königsh. (7d 8°/80%) | | | 91 | 35 | 63 | 45 | 53 | 64 | 67 |
| [s] | | (+2d NK) | 162 | 101 | 128 | 134 | 119 | 136 | 119 |
| | | (+7d NK) | 193 | 119 | 154 | 172 | 153 | 160 | 137 |
| | | (+3w NK) | 202 | 151 | 167 | 192 | 154 | 164 | 151 |
| Aspekt (8°/80%) Anzahl Markierungen | | | schön 1 (schw.) | schön 1 (schw.) | schön keine | schön keine | I. matt keine | Struktur 2 (weiss) | schön 1 (schw.) |

| | | | | | | | | | |
|---|---|---|---|---|---|---|---|---|---|
| "I." steht für "leicht"; "schw." steht für "schwach" | | | | | | | | | |

**Tabelle 4: Zusammensetzung und Eigenschaften von EZ-22 bis EZ-28.**

| **Beispiel** | | | ***EZ-22*** | ***EZ-23*** | ***EZ-24*** | ***EZ-25*** | ***EZ-26*** | ***EZ-27*** | ***EZ-28*** |
|---|---|---|---|---|---|---|---|---|---|
| **Harz-Komp.:** | | | | | | | | | |
| | Araldite^{®} GY-250 | | 167.2 | 167.2 | 167.2 | 167.2 | 167.2 | 167.2 | 167.2 |
| | Araldite^{®} DY-E | | 31.8 | 31.8 | 31.8 | 31.8 | 31.8 | 31.8 | 31.8 |
| **Härter-Komp.:** | | | | | | | | | |
| | Addukt **A-1** | | 39.8 | 49.7 | 49.7 | 59.6 | 59.6 | 59.6 | 74.6 |
| | primäres Diamin | | ***RFD*** | ***RFD*** | ***RFD*** | ***RFD*** | ***RFD*** | ***RFD*** | ***RFD*** |
| | | | 28.8 | 20.1 | 26.8 | 18.1 | 20.1 | 15.4 | 10.1 |
| | sek. Diamin **S-1** | | 30.1 | 36.1 | 18.0 | 23.4 | 18.0 | 30.1 | 18.0 |
| | Ancamine^{®} K 54 | | 6.0 | 6.1 | 5.9 | 6.0 | 5.9 | 6.1 | 6.0 |
| | | | | | | | | | |
| %-Anteile NH-eq¹ | | A | 40 | 50 | 50 | 60 | 60 | 60 | 75 |
| | | P | 43 | 30 | 40 | 27 | 30 | 23 | 15 |
| | | S | 17 | 20 | 10 | 13 | 10 | 17 | 10 |
| | | | | | | | | | |
| Viskosität (10') [Pa·s] | | | 0.91 | 1.04 | 1.12 | 1.19 | 1.35 | 1.06 | 1.57 |
| Königshärte | | (2d NK) | 123 | 104 | 143 | 130 | 147 | 113 | 141 |
| [s] | | (4d NK) | 128 | 122 | 178 | 161 | 177 | 141 | 159 |
| | | (7d NK) | 160 | 146 | 190 | 170 | 185 | 154 | 184 |
| | | (4w NK) | 186 | 168 | 194 | 173 | 190 | 180 | 185 |
| Aspekt (NK) | | | schön | schön | schön | schön | schön | schön | schön |
| Königsh. (7d 8°/80%) | | | 55 | 40 | 62 | 62 | 67 | 59 | 84 |
| [s] | | (+2d NK) | 109 | 106 | 144 | 127 | 147 | 127 | 153 |
| | | (+7d NK) | 135 | 130 | 161 | 155 | 165 | 135 | 172 |
| | | (+4w NK) | 160 | 137 | 164 | 168 | 171 | 147 | 175 |
| Aspekt (8°/80%) Anzahl Markierungen | | | I. matt 1 (schw.) | I. matt 1 (schw.) | I. matt 1 (weiss) | I. matt keine | I. matt 1 (schw.) | I. matt 1 (schw.) | I. matt 1 (schw.) |

| | | | | | | | | | |
|---|---|---|---|---|---|---|---|---|---|
| "I." steht für "leicht"; "schw." steht für "schwach" ¹ %-Anteile der Anzahl Aminwasserstoffe aus dem Addukt ("A"), dem primären Diamin ("P") und den sekundären Diamin ("S"). | | | | | | | | | |

**Tabelle 5: Zusammensetzung und Eigenschaften von Ref-1 bis Ref-6.**

| **Beispiel** | | | ***Ref-1*** | ***Ref-2*** | ***Ref-3*** | ***Ref-4*** | ***Ref-5*** | ***Ref-6*** |
|---|---|---|---|---|---|---|---|---|
| **Harz-Komp.:** | | | | | | | | |
| | Araldite^{®} GY-250 | | 167.2 | 167.2 | 167.2 | 167.2 | 167.2 | 167.2 |
| | Araldite^{®} DY-E | | 31.8 | 31.8 | 31.8 | 31.8 | 31.8 | 31.8 |
| **Härter-Komp.:** | | | | | | | | |
| | Addukt | | **A-1** | **A-1** | **A-1** | **A-1** | **A-1** | **A-6** |
| | | | 59.6 | 59.6 | 59.6 | 74.6 | 79.5 | 35.6 |
| | primäres Diamin | | ***RFD*** 26.8 | ***TMD*** 13.2 | - | - | - | ***RFD*** 22.3 |
| | sek. Diamin | | - | - | **S-1** | **S-1** | **S-1** | **S-1** |
| | | | | | 72.1 | 45.1 | 36.1 | 30.1 |
| | Ancamine^{®} K 54 | | 5.7 | 5.54 | 6.61 | 6.4 | 6.3 | 5.7 |
| | | | | | | | | |
| | | A | 60 | 60 | 60 | 75 | 80 | 50 |
| Verhältnis NH-eq¹ | | P | 40 | 40 | 0 | 0 | 0 | 33 |
| | | S | 0 | 0 | 40 | 25 | 20 | 17 |
| | | | | | | | | |
| Viskosität (10')[Pa·s] | | | 1.74 | 1.61 | 0.73 | 1.11 | 1.20 | 0.96 |
| Königshärte | | (2d NK) | 160 | 179 | 46 | 77 | 91 | 111 |
| [s] | | (4d NK) | 181 | 200 | 64 | 88 | 124 | 132 |
| | | (7d NK) | 207 | 205 | 70 | 88 | 125 | 149 |
| | | (4w NK) | 211 | 213 | 70 | 106 | 125 | 152 |
| Aspekt (NK) | | | schön | schön | I. trüb | schön | schön | trüb, Struktur |
| Königsh. (7d 8°/80%) | | | 113 | 123 | 18 | 39 | 31 | 39 |
| [s] | | (+2d NK) | 178 | 166 | 32 | 75 | 78 | 97 |
| | | (+7d NK) | 192 | 196 | 40 | 97 | 85 | 123 |
| | | (+4w NK) | 216 | 200 | 49 | 105 | 102 | 144 |
| Aspekt (8°/80%) Anzahl Markierungen | | | schön 1 (schw.) | I.trüb 1 (schw.) | klebrig keine | schön keine | I. matt 1 (schw.) | trüb, Struktur 2 (weiss) |

| | | | | | | | | |
|---|---|---|---|---|---|---|---|---|
| "I." steht für "leicht"; "schw." steht für "schwach" ¹ %-Anteile der Anzahl Aminwasserstoffe aus dem Addukt ("A"), dem primären Diamin ("P") und den sekundären Diamin ("S"). | | | | | | | | |

**Tabelle 6: Zusammensetzung und Eigenschaften von EZ-29 bis EZ-31.**

| **Beispiel** | | | ***EZ-29*** | ***EZ-30*** | ***EZ-31*** |
|---|---|---|---|---|---|
| **Harz-Komp.:** | | | | | |
| | Araldite^{®} GY-250 | | 167.2 | 167.2 | 167.2 |
| | Araldite^{®} DY-E | | 31.8 | 31.8 | 31.8 |
| **Härter-Komp.:** | | | | | |
| | | Addukt | **A-7** | **A-8** | **A-2** |
| | | | 47.4 | 49.7 | 54.6 |
| | primäres Diamin | | ***RFD*** 22.3 | ***RFD*** 22.3 | ***RFD*** 20.1 |
| | sek. Diamin | | **S-1** 30.1 | S-1 30.1 | **S-6** 21.4 |
| | Ancamine^{®} K 54 | | 5.9 | 6.0 | 5.5 |
| | | | | | |
| | Viskosität (10')[Pa·s] | | 0.75 | 1.15 | 1.29 |
| | Königshärte | (2d NK) | 84 | 105 | 178 |
| | [s] | (4d NK) | 129 | 133 | 179 |
| | | (7d NK) | 154 | 153 | 181 |
| | | (4w NK) | 176 | 179 | 206 |
| | Aspekt (NK) | | schön | schön | schön |
| | Königshärte. (7d 8°/80%) | | 29 | 35 | 71 |
| | [s] | (+2d NK) | 88 | 90 | 167 |
| | | (+7d NK) | 129 | 115 | 190 |
| | | (+4w NK) | 161 | 136 | 197 |
| | Aspekt (8°/80%) Anzahl Markierungen | | schön keine | schön 1 (schw.) | schön keine |

## Patentansprüche

1. Härter, geeignet zum Aushärten von Epoxidharzen, enthaltend
- mindestens ein Addukt aus mindestens einem primären Diamin **P1** und mindestens einem aromatischen Monoepoxid,
- mindestens ein primäres Diamin **P2,** und
- mindestens ein sekundäres Diamin, welches frei von primären Aminogruppen und frei von Hydroxylgruppen ist, und bei welchem es sich nicht um 1,3-Bis(benzylaminomethyl)benzol handelt.

2. Härter gemäss Anspruch 1, **dadurch gekennzeichnet, dass** das Addukt durch Umsetzung des primären Diamins **P1** und des Monoepoxids in einem Molverhältnis im Bereich von 1/0.8 bis 1/1.5 erhältlich ist.

3. Härter gemäss einem der Ansprüche 1 oder 2, **dadurch gekennzeichnet, dass** das Monoepoxid ein Kresylglycidylether ist.

4. Härter gemäss einem der Ansprüche 1 bis 3, **dadurch gekennzeichnet, dass** das primäre Diamin **P1** ausgewählt ist aus der Gruppe bestehend aus 1,6-Hexandiamin, 1,5-Diamino-2-methylpentan, 2,2,4- und 2,4,4-Trimethylhexamethylendiamin, Isophorondiamin, 1,3-Bis(aminomethyl)cyclohexan, 1,4-Bis(aminomethyl)cyclohexan, 2- und 4-Methyl-1,3-diaminocyclohexan und Mischungen davon, und 1,3-Bis(aminomethyl)benzol.

5. Härter gemäss einem der Ansprüche 1 bis 4, **dadurch gekennzeichnet, dass** das Addukt durch Umsetzung von 1,5-Diamino-2-methylpentan und einem Kresylglycidylether in einem Molverhältnis im Bereich von 1/0.9 bis 1/1.2 erhältlich ist.

6. Härter gemäss einem der Ansprüche 1 bis 5, **dadurch gekennzeichnet, dass** das primäre Diamin **P2** ein Molekulargewicht im Bereich von 140 bis 300 g/mol aufweist und ausgewählt ist aus der Gruppe bestehend aus Isophorondiamin, 2,2,4- und 2,4,4-Trimethylhexamethylendiamin, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, 4,7-Dioxadecan-1,10-diamin, Polyoxypropylendiaminen und cycloaliphatischen ethergruppenhaltigen Diaminen aus der Propoxylierung und nachfolgenden Aminierung von 1,4-Dimethylolcyclohexan.

7. Härter gemäss Anspruch 6, **dadurch gekennzeichnet, dass** das primäre Diamin **P2** ein Polyoxypropylendiamin oder ein cycloaliphatisches ethergruppenhaltiges Diamin aus der Propoxylierung und nachfolgenden Aminierung von 1,4-Dimethylolcyclohexan ist.

8. Härter gemäss einem der Ansprüche 1 bis 7, **dadurch gekennzeichnet, dass** das sekundäre Diamin ein N,N'-Dialkylierungsprodukt eines primären Diamins **P3** ist, wobei das primäre Diamin **P3** ausgewählt ist aus der Gruppe bestehend aus 1,6-Hexandiamin, 1,5-Diamino-2-methylpentan, 1,3-Bis(aminomethyl)cyclohexan, 1,4-Bis(aminomethyl)cyclohexan und 1,3-Bis(aminomethyl)benzol.

9. Härter gemäss einem der Ansprüche 1 bis 8, **dadurch gekennzeichnet, dass** das sekundäre Diamin 1,3-Bis(2-ethylhexylaminomethyl)benzol ist.

10. Härter gemäss einem der Ansprüche 1 bis 8, **dadurch gekennzeichnet, dass** das sekundäre Diamin 1,3-Bis(2-phenylethylaminomethyl)benzol ist.

11. Härter gemäss einem der Ansprüche 1 bis 10, **dadurch gekennzeichnet, dass** das Addukt, das primäre Diamin P2 und das sekundäre Diamin in einem solchen Verhältnis vorliegen, dass von der Gesamtzahl ihrer gegenüber Epoxidgruppen reaktiven Aminwasserstoffe
15 bis 75 % aus dem Addukt,
15 bis 60 % aus dem primären Diamin **P2,** und
10 bis 40 % aus dem sekundären Diamin stammen.

12. Epoxidharz-Zusammensetzung enthaltend mindestens ein Epoxidharz, und mindestens einen Härter gemäss einem der Ansprüche 1 bis 11.

13. Epoxidharz-Zusammensetzung gemäss Anspruch 12, **dadurch gekennzeichnet, dass** sie eine zweikomponentige Zusammensetzung ist, bestehend aus
(i) einer Harz-Komponente enthaltend mindestens ein Epoxidharz und
(ii) einer Härter-Komponente enthaltend den Härter gemäss einem der Ansprüche 1 bis 11.

14. Ausgehärtete Zusammensetzung erhalten aus der Aushärtung einer Zusammensetzung gemäss einem der Ansprüche 12 oder 13.

15. Artikel enthaltend eine ausgehärtete Zusammensetzung gemäss Anspruch 14.

## Claims

1. A curing agent, suitable for curing epoxy resins, containing
- at least one adduct of at least one primary diamine **P1** and at least one aromatic monoepoxide,
- at least one primary diamine **P2,** and
- at least one secondary diamine, which is free of primary amino groups and free of hydroxyl groups, and which is not 1,3-bis(benzylaminomethyl)benzene.

2. The curing agent according to claim 1, **characterized in that** the adduct can be obtained by reacting the primary diamine **P1** with the monoepoxide in a molar ratio ranging from 1/0.8 to 1/1.5.

3. The curing agent according to either of claims 1 and 2, **characterized in that** the monoepoxide is a cresyl glycidyl ether.

4. The curing agent according to any one of claims 1 to 3, **characterized in that** the primary diamine **P1** is selected from the group consisting of 1,6-hexanediamine, 1,5-diamino-2-methylpentane, 2,2,4-and 2,4,4-trimethylhexamethylenediamine, isophoronediamine, 1,3-bis(aminomethyl)cyclohexane, 1,4-bis(aminomethyl)cyclohexane, 2- and 4-methyl-1,3-diaminocyclohexane and mixtures thereof, and 1,3-bis(aminomethyl)benzene.

5. The curing agent according to any one of claims 1 to 4, **characterized in that** the adduct can be obtained by reacting 1,5-diamino-2-methylpentane with a cresyl glycidyl ether in a molar ratio ranging from 1/0.9 to 1/1.2.

6. The curing agent according to any one of claims 1 to 5, **characterized in that** the primary diamine P2 has a molecular weight ranging from 140 to 300 g/mol, and is selected from the group consisting of isophoronediamine, 2,2,4- and 2,4,4-trimethylhexamethylenediamine, 1,3-bis(aminomethyl)cyclohexane, 1,4-bis(aminomethyl)cyclohexane, bis(4-aminocyclohexyl)methane, bis(4-amino-3-methylcyclohexyl)methane, 4,7-dioxadecane-1,10-diamine, polyoxypropylenediamines and cycloaliphatic ether group-containing diamines from the propoxylation and subsequent amination of 1,4-dimethylolcyclohexane.

7. The curing agent according to claim 6, **characterized in that** the primary diamine **P2** is a polyoxypropylenediamine or a cycloaliphatic ether group-containing diamine from the propoxylation and subsequent amination of 1,4-dimethylolcyclohexane.

8. The curing agent according to any one of claims 1 to 7, **characterized in that** the secondary diamine is an N,N'-dialkylation product of a primary diamine **P3,** wherein the primary diamine **P3** is selected from the group consisting of 1,6-hexanediamine, 1,5-diamino-2-methylpentane, 1,3-bis(aminomethyl)cyclohexane, 1,4-bis(aminomethyl)cyclohexane and 1,3-bis(aminomethyl)benzene.

9. The curing agent according to any one of claims 1 to 8, **characterized in that** the secondary diamine is 1,3-bis(2-ethylhexylaminomethyl)benzene.

10. The curing agent according to any one of claims 1 to 8, **characterized in that** the secondary diamine is 1,3-bis(2-phenylethylaminomethyl)benzene.

11. The curing agent according to any one of claims 1 to 10, **characterized in that** the ratio of adduct, the primary diamine **P2** and the secondary diamine is such that, of the total number of amine hydrogens thereof that are reactive to epoxy groups,
15 to 75% are from the adduct,
15 to 60% are from the primary diamine **P2,** and
10 to 40% are from the secondary diamine.

12. An epoxy resin composition containing at least one epoxy resin and at least one curing agent according to any one of claims 1 to 11.

13. The epoxy resin composition according to claim 12, **characterized in that** it is a two-component composition, consisting of
(i) a resin component containing at least one epoxy resin and
(ii) a curing agent component containing the curing agent according to any one of claims 1 to 11.

14. A cured composition obtained by curing a composition according to either of claims 12 and 13.

15. An article containing a cured composition according to claim 14.

## Revendications

1. Durcisseur approprié pour le durcissement de résines époxydes, contenant
- au moins un produit d'addition d'au moins une diamine primaire **P1** et d'au moins un monoépoxyde aromatique,
- au moins une diamine primaire **P2** et
- au moins une diamine secondaire, qui est exempte de groupes amino primaires et exempte de groupes hydroxyle et pour laquelle il ne s'agit pas du 1,3-bis(benzylaminométhyl)benzène.

2. Durcisseur selon la revendication 1, **caractérisé en ce que** le produit d'addition peut être obtenu par transformation de la diamine primaire **P1** et du monoépoxyde dans un rapport molaire dans la plage de 1/0,8 à 1/1,5.

3. Durcisseur selon l'une quelconque des revendications 1 ou 2, **caractérisé en ce que** le monoépoxyde est un crésylglycidyléther.

4. Durcisseur selon l'une quelconque des revendications 1 à 3, **caractérisé en ce que** la diamine primaire **P1** est choisie dans le groupe constitué par la 1,6-hexanediamine, le 1,5-diamino-2-méthylpentane, la 2,2,4-triméthylhexaméthylènediamine et la 2,4,4-triméthylhexaméthylènediamine, l'isophoronediamine, le 1,3-bis(aminométhyl)cyclohexane, le 1,4-bis(aminométhyl)cyclohexane, le 2-méthyl-1,3-diaminocyclohexane et le 4-méthyl-1,3-diaminocyclohexane et leurs mélanges, et le 1,3-bis(aminométhyl)benzène.

5. Durcisseur selon l'une quelconque des revendications 1 à 4, **caractérisé en ce que** le produit d'addition peut être obtenu par transformation de 1,5-diamino-2-méthylpentane et d'un crésylglycidyléther dans un rapport molaire dans la plage de 1/0,9 à 1/1,2.

6. Durcisseur selon l'une quelconque des revendications 1 à 5, **caractérisé en ce que** la diamine primaire **P2** présente un poids moléculaire dans la plage de 140 à 300 g/mole et est choisie dans le groupe constitué par l'isophoronediamine, la 2,2,4-triméthylhexaméthylènediamine et la 2,4,4-triméthylhexaméthylènediamine, le 1,3-bis(aminométhyl)cyclohexane, le 1,4-bis(aminométhyl)cyclohexane, le bis(4-aminocyclohexyl)méthane, le bis(4-amino-3-méthylcyclohexyl)méthane, la 4,7-dioxadécane-1,10-diamine, les polyoxypropylènediamines et les diamines cycloaliphatiques contenant des groupes éther provenant de la propoxylation et de l'amination consécutive du 1,4-diméthylolcyclohexane.

7. Durcisseur selon la revendication 6, **caractérisé en ce que** la diamine primaire **P2** est une polyoxypropylènediamine ou une diamine cycloaliphatique contenant des groupes éther provenant de la propoxylation et de l'amination consécutive de 1,4-diméthylolcyclohexane.

8. Durcisseur selon l'une quelconque des revendications 1 à 7, **caractérisé en ce que** la diamine secondaire est un produit de N,N'-dialkylation d'une diamine primaire **P3,** la diamine primaire **P3** étant choisie dans le groupe constitué par la 1,6-hexanediamine, le 1,5-diamino-2-méthylpentane, le 1,3-bis(aminométhyl)cyclohexane, le 1,4-bis(aminométhyl)cyclohexane et le 1,3-bis(aminométhyl)benzène.

9. Durcisseur selon l'une quelconque des revendications 1 à 8, **caractérisé en ce que** la diamine secondaire est le 1,3-bis(2-éthylhexylaminométhyl)benzène.

10. Durcisseur selon l'une quelconque des revendications 1 à 8, **caractérisé en ce que** la diamine secondaire est le 1,3-bis(2-phényléthylaminométhyl)benzène.

11. Durcisseur selon l'une quelconque des revendications 1 à 10, **caractérisé en ce que** le produit d'addition, la diamine primaire **P2** et la diamine secondaire se trouve dans un rapport tel que parmi le nombre total d'hydrogènes de fonction amine réactifs par rapport à leurs groupes époxydes
15 à 75% proviennent du produit d'addition,
15 à 60% proviennent de la diamine primaire **P2** et
10 à 40% proviennent de la diamine secondaire.

12. Composition de résine époxyde contenant au moins une résine époxyde et au moins un durcisseur selon l'une quelconque des revendications 1 à 11.

13. Composition de résine époxyde selon la revendication 12, **caractérisée en ce qu'**il s'agit d'une composition à deux composants, constituée par
(i) un composant de résine, contenant au moins une résine époxyde et
(ii) un composant durcisseur, contenant le durcisseur selon l'une quelconque des revendications 1 à 11.

14. Composition durcie obtenue à partir du durcissement d'une composition selon l'une quelconque des revendications 12 ou 13.

15. Objet, contenant une composition durcie selon la revendication 14.
